# EUROPÄISCHE PATENTSCHRIFT

(11) **EP 2 439 064 B1**
(45) Veröffentlichungstag und Bekanntmachung des Hinweises auf die Patenterteilung: **10.07.2019**
(21) Anmeldenummer: 11178380.9
(22) Anmeldetag: 23.08.2011
(51) Int. Cl.: B32B 17/10, F41H 5/04

(54) **Verbundscheibe**
Laminated glazing
Vitrage feuilleté

(30) Priorität: 05.10.2010 DE 102010037992
(43) Veröffentlichungstag der Anmeldung: 11.04.2012
(73) Patentinhaber: Schott AG, 55122 Mainz (DE)
(72) Erfinder: Freitag, Rüdiger, 36433 Etterwinden (DE); Panzner, Gerrit, 07407 Rudolstadt (DE)
(74) Vertreter: Herrmann, Jochen

(56) Entgegenhaltungen:
- EP-A1- 2 110 238
- WO-A1-2008/084083
- CH-A2- 700 398
- GB-A- 1 451 931
- PATEL P J ET AL: "Transparent Armor", AMPTIAC QUARTERLY, ANALYSIS CENTER, ROME, NY, vol. 4, no. 3, 1 January 2000 (2000-01-01) , pages 1-5,13, XP002405973,

## Beschreibung

Die Erfindung betrifft eine Verbundscheibe, insbesondere eine monolithische, angriffhemmende und feuerwiderstandsfähige Verglasung.

Eine solche Verglasung ist aus der WO 2005/090255 A2 bekannt. Dabei besteht die Verbundscheibe aus einer Frontscheibe, die der Angriffsseite (das ist die Seite, die gemäß EN 1063 dem mechanischen Angriff zugewandt ist) bildet. Diese Frontscheibe ist mit einer intumeszierenden Schicht hinterlegt. Solche intumeszierenden Schichten sind allgemein bei Brandschutzverglasungen bekannt und dienen der Wärmedämmung, wobei das Material, das die intumeszierende Schicht bildet, unter Volumenzunahme und Dichteabnahme aufschäumt. Der Frontscheibe abgewandt ist die intumeszierende Schicht mit einer weiteren Glasscheibe hinterlegt. Auf diese Glasscheibe ist eine Folie aus Polyvinylbutyral aufgelegt, die wiederum mit einer Glasscheibe hinterlegt ist.

Wenn dieses bekannte Glas einem Brand ausgesetzt ist, so wirkt die intumeszierende Schicht wärmedämmend. Zusätzlich bildet die Polyvinylbutyralschicht noch eine Sicherheit gegen Durchdringen von Gegenständen. In der Praxis hat sich gezeigt, dass solche Verbundscheiben allerdings nicht ausreichend haltbar bei Schussbeanspruchung sind. Insbesondere werden die Anforderungen der Norm EN 1063 nur schwerlich erfüllt.

Wird eine solche Verbundscheibe beschossen, so tritt das Geschoss in die Frontscheibe ein und löst dadurch eine Stoßwelle aus, die über die intumeszierende Schicht derart in die dahinterliegende Glasscheibe eingeleitet wird, dass auch diese sofort bricht. Schließlich bewirkt die Schockwelle auch, dass unkontrolliert Splitter von der rückwärtigen Abschlussfläche sich lösen und eine Verletzungsgefahr bilden. Aus dem Stand der Technik sind auch weitere Schutzverglasungen bekannt. Beispielsweise zeigt die WO 2008/068744 A1 eine Verbundscheibe, die stark durchbruchhemmende Eigenschaften aufweist. Hierzu ist ein Glaspaket bestehend aus mehreren parallel zueinander angeordneten und miteinander verbundenen Glasscheiben verwendet. Hinter dieses Glaspaket ist eine massive Scheibe aus Polycarbonat gestellt. Über die Polycarbonatscheibe können hohe kinetische Energien abgefangen werden. Nachteilig bei diesen durchbruchhemmenden Verglasungen ist die mangelnde Brandschutzbeständigkeit.

Eine weitere Verbundscheibe ist aus US 2009/0246426 A1 bekannt. Dabei wird eine Brandschutzverglasung dadurch erhalten, dass mehrere Kalknatronscheiben zueinander parallel beabstandet angeordnet sind. Die Zwischenräume zwischen den Kalknatronscheiben werden mit einer intumeszierenden Schicht ausgefüllt. Diese verbindet die Kalknatronscheiben miteinander. Zusätzlich werden Kunststofffolien zwischen den Kalknatronscheiben und der intumeszierenden Schicht positioniert. Die Kunststofffolien können beispielsweise UV-absorbierende Eigenschaften aufweisen. Der Aufbau dieser bekannten Verglasung ist komplex und nur sehr aufwändig zu fertigen.

Weiterhin sind aus dem Stand der Technik Brandschutzverglasungen bekannt, die beispielsweise nach EN 357 klassifiziert sind. Diese Brandschutzverglasung sichert den Raumabschluss, wobei die Wärmeleitung erheblich eingedämmt wird. Brandschutzverglasungen haben den Nachteil, dass sie nicht den erforderlichen Widerstand gegen Beschuss gemäß EN 1063 aufweisen.

Aus CH 700 398 A2 ist eine Verbundscheibe bekannt, bei der ein Brandschutzglas mit einem Sicherheitsglas kombiniert ist. Hierdurch soll zum einen ein Brandschutz und zum anderen ein Schutz gegen mechanische Einwirkungen erreicht werden. Zu diesem Zweck ist das Brandschutzglas mit dem Sicherheitsglas über eine Verbindungsfolie verbunden. Die Verbindung wird dabei im Autoklav-Ofen durchgeführt, um ein Ausreagieren einer intumeszierenden Schicht der Brandschutzverglasung zu verhindern.

Aus EP 2 110 238 A1 ist eine Isolierverglasung, bestehend aus drei Verbundscheiben beschrieben. Die Verbundscheiben sind über Abstandshalter miteinander gekoppelt. Eine äußere, einer Angriffsseite zugewandte Verbundscheibe ist aus zwei Glasscheiben gebildet, die miteinander verklebt sind. Die mittlere Verbundscheibe ist in ähnlicher Weise aufgebaut. Eine dritte Verbundscheibe, welche einem Schutzraum zugeordnet ist weist mindestens drei Scheiben auf, die miteinander mittels Klebeschichten verbunden sind. Mit einem solchen Scheibenaufbau soll ein hoher Explosionsschutz geboten werden.

Es ist Aufgabe der Erfindung, eine Verbundscheibe zu schaffen, die gute Brandschutzeigenschaften aufweist und einen hohen Widerstand gegen Beschuss im Sinne der EN 1063 aufweist.

Diese Aufgabe wird mit den Merkmalen des Anspruches 1 gelöst.

Demgemäß ist eine Verbundscheibe mit einer Frontscheibe vorgesehen, die eine Angriffsseite bildet und mit einer Brandschutzverglasung kombiniert ist. Die Brandschutzverglasung weist mindestens eine intumeszierende Schicht auf, die im Brandfall aufschäumt und gut wärmedämmende Eigenschaften aufweist. Die intumeszierende Schicht ist der Angriffsseite abgekehrt hinter der geometrischen Mittelebene der Verbundscheibe angeordnet. Diese Positionierung der intumeszierenden Schicht in der hinteren, dem Beschuss abgewandten, Hälfte des Laminats ist wesentlich. Insbesondere hat sich gezeigt, dass die Brandschutzverglasung eine Schwachstelle bei Beschuss bilden kann und durch Bruch versagt. Dadurch, dass die intumeszierende Schicht hinter der geometrischen Mittelebene angeordnet ist, wird die Brandschutzverglasung nunmehr nicht mehr unmittelbar dem Aufschlag eines Geschosses ausgesetzt, und ist der Geschosseinwirkung weitgehend entzogen. Durch die Geschosseinwirkung kann die Brandschutzverglasung zwar brechen, jedoch bleibt die Funktionalität der Brandschutzverglasung aufrechterhalten, da sie im Bereich zwischen der Frontscheibe und einer rückwärtigen Abschlussscheibe einlaminiert ist. Damit wird die Brandschutzverglasung in der Verbundscheibe im Verbund beziehungsweise in der Struktur gehalten. Dies ermöglicht es, dass auch nach einem Beschuss Brandschutz als duale Funktion gewährleistet ist. Die Abschlussscheibe besteht aus einem Kunststoffmaterial. Dadurch wird der Splitterabgang rückseitig verhindert, sodass hohe Schutzwirkungen gemäß EN 1063 möglich werden.

Erfindungsgemäß ist es vorgesehen, dass im Bereich zwischen der Frontscheibe und der Brandschutzverglasung wenigstens eine Zwischenscheibe angeordnet ist. Mit dieser beziehungsweise diesen Zwischenscheiben wird die Schutzwirkung der Verbundscheibe weiter erhöht. Insbesondere lassen sich dadurch höhere Klassifizierungen nach EN 1063 erreichen. Gemäß der Erfindung ist es weiterhin vorgesehen, dass die Mittelebene der Verbundscheibe die Zwischenscheibe schneidet oder dass die Zwischenscheibe der Angriffsseite abgekehrt hinter der geometrischen Mittelebene der Verbundscheibe angeordnet ist. Im Bereich der dem Beschuss zugewandten Seite wird somit ein massives Glaspaket gebildet, das auch dem Einschlag mehrerer Geschosse widerstehen kann.

Zwischen der Frontscheibe und der anschließenden Zwischenscheibe ist eine Verbundschicht aus Kunststoffmaterial, insbesondere bestehend aus Polyvinylbutyral, Polycarbonat oder Polymethylmethacrylat, angeordnet. Damit wird eine weitere Stärkung des Scheibenverbundes erreicht. Insbesondere Schichten aus Polycarbonat oder Polymethylmethacrylat ermöglichen die Aufnahme hoher kinetischer Energien, bevor sie durchdrungen werden.

Eine besonders bevorzugte Ausgestaltungsvariante der Erfindung ist derart, dass die Brandschutzverglasung mindestens zwei Scheiben aus Glas oder Glaskeramik aufweist, zwischen denen die intumeszierende Schicht angeordnet ist. Derartige Brandschutzverglasungen können handelsüblich bezogen werden, sodass eine einfache Fertigung möglich wird.

Die Ankopplung der Brandschutzverglasung an die Frontscheibe oder die Zwischenscheibe erfolgt auf einfache Weise mit einer Verbundschicht, bestehend insbesondere aus Polyurethan, erfolgen. Denkbar ist es auch, dass die Brandschutzverglasung mit der Abschlussscheibe mittels einer solchen Verbundschicht, insbesondere aus Polyurethan, verbunden ist. Dabei lassen sich beispielsweise Polyurethanfolien für die Fertigung einsetzen, die kostengünstig bezogen werden können. Zur Fertigung werden die Polyurethanfolien zwischen die zu verbindenden Scheiben gelegt und der so gebildete Scheibenverbund in einen Autoklavofen, beispielsweise im Sackverfahren, eingebracht. Unter erhöhten Temperatur- und Druckwerten erfolgt dann eine Verbackung der Glas- bzw. Glaskeramikschichten, wobei die Polyurethanfolien aufschmelzen und als Haftvermittler dienen. Auf diese Weise kann eine vollflächige Verbindung mit guten Festigkeitseigenschaften erreicht werden. Die so gebildete Verbundscheibe kann einfach gehandhabt und verbaut werden.

Gemäß einer bevorzugten Ausgestaltungsvariante der Erfindung ist vorgesehen, dass die Abschlussscheibe aus Polycarbonat oder Polymethylmethacrylat besteht. Solche Scheiben dienen zur Aufnahme hoher kinetischer Energien und verhindern zuverlässig, dass ein rückwärtiger Splitterabgang bei Beschuss eine Verletzungsgefahr bildet. Die Abschlussscheibe kann im praktischen Einsatz mit einer kratzfesten Beschichtung versehen sein, insbesondere mit einer fest aufgebrachten Schicht oder Schutzfolie beschichtet sein. Auf diese Weise wird eine mechanische Beeinträchtigung der Optik der Abschlussscheibe einfach verhindert.

Es hat sich gezeigt, dass hohe mechanische Festigkeiten dann erreicht werden können, wenn die Abschlussscheibe eine Dicke im Bereich zwischen ≥ 2mm und ≤ 8mm aufweist.

Zur Erfüllung der Klassifizierungseinstufungen der EN 1063 ist eine erfindungsgemäße Verbundscheibe geeignet, bei der die Frontscheibe und/oder die Zwischenscheibe/-n aus einem Kalknatronglas, einem Borosilikatglas, einem Aluminiumsilikatglas, einem Lithium-Aluminium-Silikatglas oder einer Glaskeramik besteht und eine Dicke von ≥ 1mm bis ≤ 16mm aufweist.

Für eine ausreichende Brandschutzwirkung sollte die intumeszierende Schicht der Brandschutzverglasung eine Dicke im Bereich von ≥ 0,5mm bis ≤ 5mm aufweisen. Die intumeszierende Schicht kann aus mit organischen Verbindungen versetzten Alkalisilikaten oder aus Schichten aus salzgefüllten wässrigen Acrylpolymeren bestehen.

Die Erfindung wird im Folgenden anhand von in den Zeichnungen dargestellten Ausführungsbeispielen näher erläutert. Es zeigen:
- Figur 1: eine Verbundscheibe in Teildarstellung und in Seitenansicht;
- Figur 2: eine Baureihenfolge für die Verbundscheibe gemäß Figur 1 in schematischer Darstellung; und
- Figur 3: eine weitere Ausgestaltungsvariante einer Verbundscheibe in Teildarstellung und Seitenansicht.

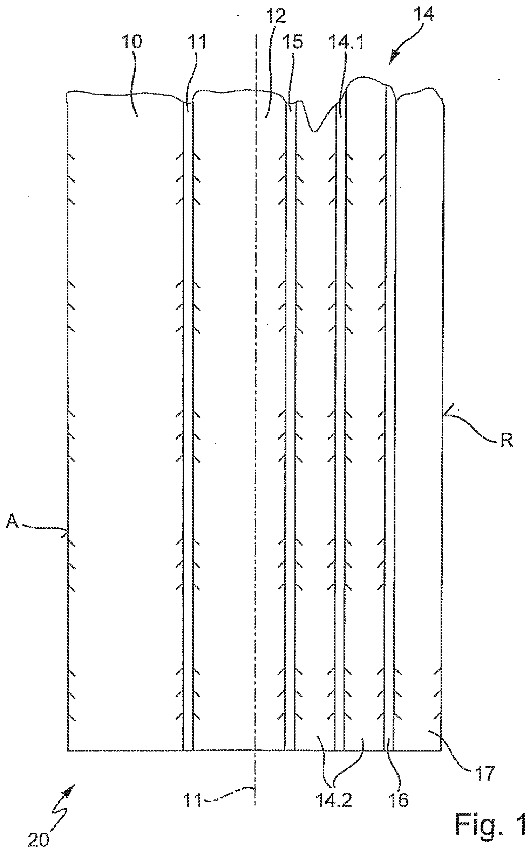

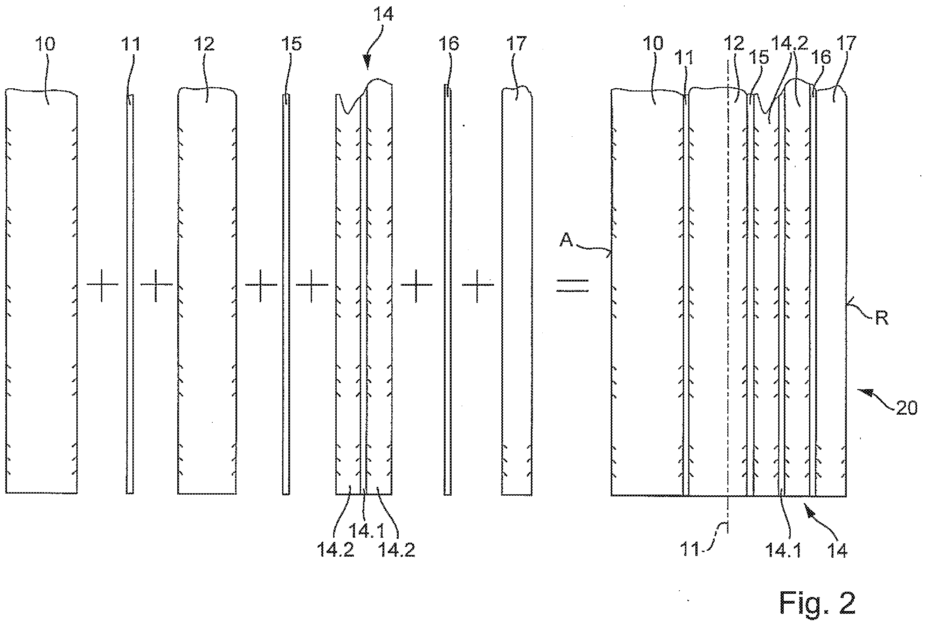

Wie die Figuren 1 und 2 erkennen lassen, bildet die Verbundscheibe 20 eine vorderseitige Frontscheibe 10, die eine Angriffsseite A bildet. Diese Angriffsseite A ist im Sinne der Norm EN 1063 dem Beschuss zugewandt und bildet somit die Frontseite der Verglasung. Hinter die Frontscheibe 10 ist eine Zwischenscheibe 12 unter Zwischenlage einer Verbundschicht 11 gesetzt. Zur Festigkeitsoptimierung weist die Frontscheibe 10 eine größere Dicke als die Zwischenscheibe 12 auf. Beispielsweise kann die Frontscheibe 10 aus einem 9mm starken Boroslikatglas und die Zwischenscheibe aus einem 7,5mm starken Borosilikatglas gebildet sein. Selbstverständlich ist auch die Verwendung anderer Glasarten, beispielsweise Kalknatronscheiben, etc., denkbar. Borosilikatglasscheiben haben den Vorteil, dass sie auch eine hohe Brandschutzwirkung bieten und über lange Befeuerungszeiten einen zuverlässigen Raumabschluss bilden. Durch die unterschiedliche Dicke der Frontscheibe und der Zwischenscheibe wird eine Gewichtsoptimierung erreicht und zusätzlich eine hohe Beschusssicherheit gewährleistet. Hierbei macht man sich die Erkenntnis zunutze, dass ein auftreffendes erstes Geschoss zunächst die Frontscheibe 10 zerstört. Diese Frontscheibe 10 wird durch die Verbundschicht 11 aber in Struktur gehalten. Ein nachfolgendes Geschoss muss zunächst die zerstörte Frontscheibe 10 durchdringen, bis es in den Bereich der Zwischenscheibe 12 gelangt. Dabei verliert es bereits einen Großteil seiner kinetischen Energie, sodass die dünnere Glasausführung der Zwischenscheibe völlig ausreichend ist.

Die Verbundschicht kann aus Polyvinylbutyral bestehen. Dieses Material bildet zum einen eine gute mechanische Beständigkeit und hat durchbruchhemmende Eigenschaften.

Hinter dem Scheibenverbund, bestehend aus Frontscheibe 10 und Zwischenscheibe 12, ist eine Brandschutzverglasung 14 gesetzt. Diese Brandschutzverglasung 14 weist zwei zueinander parallele Scheiben 14.2, beispielsweise Glas- oder Glaskeramikscheiben, auf. Im Bereich zwischen diesen Scheiben 14.2 ist eine intumeszierende Schicht 14.1 angeordnet. Die Brandschutzverglasung 14 kann als handelsübliche Baueinheit kostengünstig bezogen werden. Beispielsweise kann das Brandschutzglas Pyranova 2.0.7 mit einer Stärke von 7mm der SCHOTT AG Verwendung finden. Die Ankopplung der Brandschutzverglasung 14 an die Rückseite der Zwischenscheibe 12 erfolgt unter Zuhilfenahme einer Verbundschicht 15. Diese Verbundschicht 15 wird von einer Polyurethanfolie gebildet.

Der Angriffsseite A abgewandt ist die Brandschutzverglasung 14 mit einer Abschlussscheibe 17 aus Kunststoffmaterial, vorliegend aus Polycarbonat, hinterlegt. Diese Abschlussscheibe 17 ist wieder mit einem Haftvermittler 16 mit der Brandschutzverglasung 14 rückseitig verbunden. Die Abschlussscheibe 17 bildet die Rückseite R der Verbundscheibe 20. Auf der Haftvermittler 16 besteht, ebenso wie die Verbundschicht 15, aus Polyurethan.

Wie die Figur 2 erkennen lässt, wird der Scheibenverbund aus mehreren Einzelbauteilen zusammengesetzt. Dementsprechend werden zunächst die Frontscheibe 10 und die Zwischenscheibe 12 unter Zwischenlage der Verbundschicht 11, nämlich der Polyvinylbutyralfolie, aneinandergelegt und im Autoklavverfahren unter Druck- und Temperatureinwirkung miteinander verbunden, wobei die Verbundschicht 11 aufschmilzt. Anschließend wird die Brandschutzverglasung 14 zwischen der Verbundschicht 15 und dem Haftvermittler 16 eingefasst, die beide von einer Polyurethanfolie mit einer Stärke von 0,5 bis 0,7mm gebildet sind. Schließlich wird die Abschlussscheibe 17 mit einer Materialstärke von 5mm aufgelegt. Der so gebildete Laminatverbund wird mit der vorher gefertigten Einheit aus Front- und Zwischenscheibe 10, 12 aneinandergelegt und in einen Autoklavofen eingebracht und dort bei einer maximalen Temperatur von 95°C und einem Druck von 5bar ca. 8 Stunden gehalten. Dabei verbacken die einzelnen Scheiben miteinander unter Vermittlung der Verbundschichten 15 und des Haftvermittlers 16. Eine solche Verbundscheibe erreicht bei einer Prüfung des Feuerwiderstandes nach EN 1363 eine Klassifizierung von EI 30. Der Widerstand gegen Beschuss nach EN 1063 beträgt BR3NS. Eine Bestrahlungsprüfung nach DIN EN 12543-4 führt zu keiner Veränderung des Prüfkörpers. Insbesondere wird die durch die Verbundschichten 11 und 15 sowie dem den Haftvermittler 16 bewirkte Verklebung nicht beschädigt.

Wie Figur 1 zeigt, ragt die Zwischenscheibe 12 über die Mittelebene M der Verbundscheibe 20, die parallel zu der durch die Frontscheibe 10 gebildete Angriffsseite A verläuft und die geometrische Mitte der Verbundscheibe 20 bildet, hinaus. Damit wird die Brandschutzverglasung 14 hinter der Mittelebene M gehalten. Diese geometrische Anordnung ist wichtig für den hohen Widerstand gegen Beschuss. Bei einem Beschuss tritt nach Auftreffen eines Geschosses zwar ein Bruch der Brandschutzverglasung 14 auf, diese wird jedoch strukturell durch die Abschlussscheibe 17 und die Zwischenscheibe 12 in ihrer Position gehalten. Damit wird die Brandschutzwirkung auch nach Beschuss aufrechterhalten. Die rückseitige Abschlussscheibe 17 verhindert zudem einen Splitterabgang aus der Brandschutzscheibe 14, sodass eine erhöhte Sicherheit geboten wird.

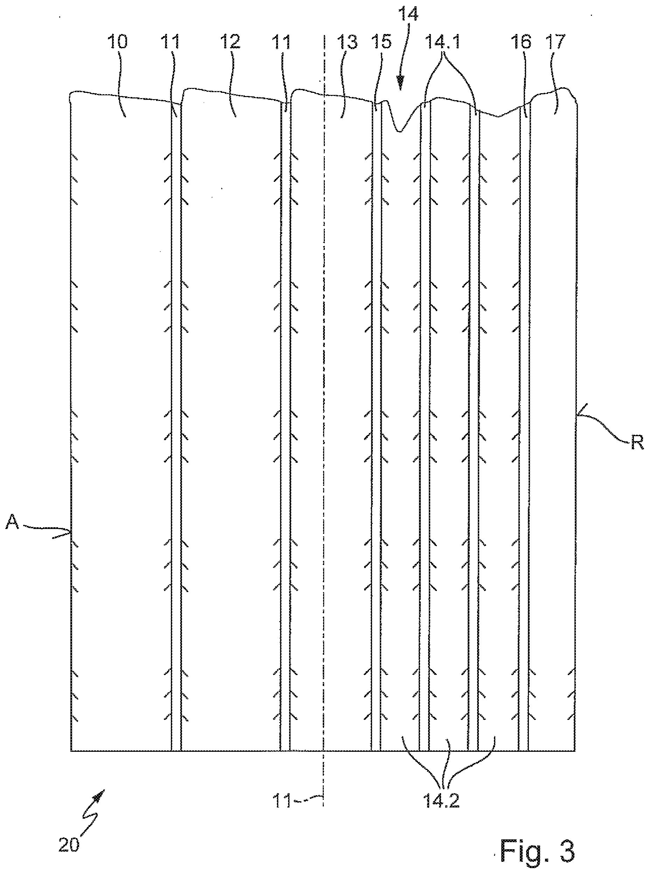

In Figur 3 ist eine weitere Ausgestaltungsvariante einer Verbundscheibe 20 gezeigt. Bei dieser Verbundscheibe 20 wird gegenüber der Ausgestaltungsvariante nach den Figuren 1 und 2 eine erhöhte Klassifizierung nach EN 1063 gegen Beschuss und ein höherer Feuerwiderstand nach EN 1363 erreicht. Insbesondere ist die Frontscheibe 10 mit zwei Zwischenscheiben 12, 13 hinterlegt. Diese Zwischenscheiben 12, 13 sind über eine Verbundschicht 11 aus Polyvinylbutyral miteinander verbunden. Die Ankopplung der Frontscheibe 10 an die Zwischenscheibe 12 erfolgt ebenfalls mit einer Schicht aus Polyvinylbutyral, wobei eine Folie mit einer Stärke von 0,38mm verwendet ist. Die Brandschutzverglasung 14 besteht aus drei Scheiben, die aus Glas- oder Glaskeramikmaterial bestehen können. Beispielsweise kann die Brandschutzverglasung 14 vom Typ Pyronova 2.0.11 der SCHOTT AG Verwendung finden. Zwischen den Scheiben 14.2 sind intumeszierende Schichten 14.1 gehalten. Die Brandschutzverglasung 14 wird unter Verwendung einer Verbundschicht 15, beispielsweise einer PUR-Folie mit einer Stärke von ca. 0,65mm, an die Rückseite der Zwischenscheibe 13 angeschlossen. Der rückwärtige Abschluss der Brandschutzverglasung 14 erfolgt wieder mit einer Abschlussscheibe 17, die aus Polycarbonat bestehen kann. Die Dicke dieser Scheibe beträgt 3mm. Die Abschlussscheibe 17 bildet wieder die Rückseite R der Verbundscheibe. Auch dieser Scheibenverbund kann, wie vorstehend beschrieben, im Autoklavverfahren mit geeigneten Temperatur- und Druckwerten gefertigt werden, wobei die maximale Temperatur 95°C und der maximale Druck 5 bar betragen sollte. Anschließend wird eine Verbundscheibe 20 erhalten, die eine Brandschutzklassifizierung nach DIN EN 357 EI 45 und eine Durchschusshemmung nach ENV 1063 BR4 erreicht.

Die erfindungsgemäßen Verbundscheiben 20 zeichnen sich insbesondere dadurch aus, dass sie auch nach einem Beschuss in Form und Struktur gehalten werden, und so eine Brandschutzwirkung auch nach einem Beschuss erhalten bleibt. Dies wird insbesondere dadurch möglich, dass die Brandschutzverglasung 14 rückseitig mit der Abschlussscheibe 17, bestehend aus Polycarbonat oder Polymethylmethacrylat, auch nach deren Bruch gehalten wird und frontseitig die verklebte Frontscheibe und/oder Zwischenscheibe 12 den Strukturverbund der Brandschutzverglasung 14 aufrechterhält.

## Patentansprüche

1. Verbundscheibe (20) mit einer Frontscheibe (10), die eine Angriffsseite (A) bildet und mit einer Brandschutzverglasung (14), die mindestens eine intumeszierende Schicht (14.1) aufweist, wobei im Bereich zwischen der Frontscheibe (10) und der Brandschutzverglasung (14) wenigstens eine Zwischenscheibe (12, 13) angeordnet ist.
und wobei zwischen der Frontscheibe (10) und der anschließenden Zwischenscheibe (12) eine Verbundschicht (11) aus Kunststoffmaterial, angeordnet ist.
**dadurch gekennzeichnet,**
**dass** die intumeszierende Schicht (14.1) der Angriffsseite (A) abgekehrt hinter der geometrischen Mittelebene (M) der Verbundscheibe (20) angeordnet ist, dass hinter der Brandschutzverglasung (14), der Mittelebene (M) abgekehrt, eine Abschlussscheibe (17), bestehend aus einem Kunststoffmaterial, angeordnet ist,
**dass** die Mittelebene (M) die Zwischenscheibe (12, 13) schneidet oder dass die Zwischenscheibe (12, 13) der Angriffsseite (A) abgekehrt, hinter der geometrischen Mittelebene (M) der Verbundscheibe (20) angeordnet ist, und dass die Zwischenscheibe (12, 13) mit der Brandschutzverglasung (14) mittels einer Verbundschicht (15) verbunden ist.

2. Verbundscheibe (20) nach Anspruch 1,
**dadurch gekennzeichnet,**
**dass** die Brandschutzverglasung (14) mindestens zwei Scheiben (14.2) aus Glas oder Glaskeramik aufweist, zwischen denen die intumeszierende Schicht (14.1) angeordnet ist.

3. Verbundscheibe (20) nach einem der Ansprüche 1 oder 2,
**dadurch gekennzeichnet,**
**dass** die Frontscheibe (10) oder die Zwischenscheibe (12, 13) mit der Brandschutzverglasung (14) mittels einer Verbundschicht (15), bestehend aus Polyurethan, verbunden ist.

4. Verbundscheibe (20) nach einem der Ansprüche 1 bis 3,
**dadurch gekennzeichnet,**
**dass** die Brandschutzverglasung (14) mit der Abschlussscheibe (17) mittels einer Verbundschicht, bestehend insbesondere aus Polyurethan, verbunden ist.

5. Verbundscheibe (20) nach einem der Ansprüche 1 bis 4,
**dadurch gekennzeichnet,**
**dass** die Abschlussscheibe (17) aus Polycarbonat oder Polymethylmethacrylat besteht.

6. Verbundscheibe (20) nach einem der Ansprüche 1 bis 5,
**dadurch gekennzeichnet,**
**dass** die Abschlussscheibe (17) der Brandschutzverglasung (14) abgekehrt mit einer kratzfesten Beschichtung versehen ist, beispielsweise eine Schutzfolie aufweist.

7. Verbundscheibe (20) nach einem der Ansprüche 1 bis 6,
**dadurch gekennzeichnet,**
**dass** die Abschlussscheibe (17) eine Dicke im Bereich zwischen ≥ 2 mm bis ≤ 8 mm aufweist.

8. Verbundscheibe (20) nach einem der Ansprüche 1 bis 7,
**dadurch gekennzeichnet,**
**dass** die Frontscheibe (10) und/oder die Zwischenscheibe/-n (12, 13) aus einem Kalknatronglas, einem Borosilikatglas, einem Aluminiumsilikatglas, einem Lithium-Aluminium-Silikatglas oder einer Glaskeramik besteht und eine Dicke von ≥ 1 mm bis ≤ 16 mm aufweist.

9. Verbundscheibe (20) nach einem der Ansprüche 1 bis 8, **dadurch gekennzeichnet, dass** die intumeszierende Schicht (14.1) der Brandschutzverglasung (14) eine Dicke im Bereich von ≥ 0,5 mm bis ≤ 5 mm aufweist.

10. Verbundscheibe (20) nach einem der Ansprüche 1 bis 9,
**dadurch gekennzeichnet,**
**dass** die intumeszierende Schicht (14.1) aus mit organischen Verbindungen versetzten Alkalisilikaten oder aus Schichten aus salzgefüllten, wässrigen Acrylpolymeren (Hydrogelen) besteht.

## Claims

1. A composite pane (20) having a front pane (10) forming the attack side (A) and having a fire protection glazing (14) comprising at least one intumescent layer (14.1), at least one intermediate pane (12,13) being disposed in the region between the front pane (10) and the fire protection glazing (14),
and a bonding layer (11) made of plastic material being disposed between the front pane (10) and the adjacent intermediate pane (12),
**characterized in that**
the intumescent layer (14.1) is disposed facing away from the attack side (A) behind the geometric center plane (M) of the composite pane (20), that a closure plane (17) made of a plastic material is disposed behind the fire protection glazing (14) and facing away from the center plane (M),
that the center plane (M) intersects the intermediate pane (12, 13) or that the intermediate pane (12, 13) is disposed behind the center plane (M) of the composite pane (20) and facing away from the attack side (A), and that the intermediate pane (12, 13) is bonded to the fire protection glazing (14) by means of a bonding layer (15).

2. The composite pane (20) according to claim 1,
**characterized in that**
the fire protection glazing (14) comprises at least two panes (14.2) made of glass or glass ceramic, between which the intumescent layer (14.1) is disposed.

3. The composite pane (20) according to any one of the claims 1 or 2,
**characterized in that**
the front pane (10) or the intermediate pane (12, 13) is bonded to the fire protection glazing (14) by means of a bonding layer (15) made of polyurethane.

4. The composite pane (20) according to any one of the claims 1 or 3,
**characterized in that**
the fire protection glazing (14) is bonded to the closure pane (17) by means of a bonding layer particularly made of polyurethane.

5. The composite pane (20) according to any one of the claims 1 or 4,
**characterized in that**
the closure pane (17) is made of polycarbonate or poly(methyl methacrylate).

6. The composite pane (20) according to any one of the claims 1 or 5,
**characterized in that**
the closure pane (17) has a scratch-proof coating, such as a protective film, opposite the fire protection glazing (14).

7. The composite pane (20) according to any one of the claims 1 or 6,
**characterized in that**
the closure pane (17) has a thickness in the range between ≥ 2 mm and ≤ 8 mm.

8. The composite pane (20) according to any one of the claims 1 or 7,
**characterized in that**
the front pane (10) and/or the intermediate pane(s) (12, 13) are made of a soda-lime glass, a borosilicate glass, an aluminum silicate glass, a lithium aluminum silicate glass, or a glass ceramic, and have a thickness of ≥ 1 mm through ≤ 16 mm.

9. The composite pane (20) according to any one of the claims 1 through 8,
**characterized in that**
the intumescent layer (14.1) of the fire protection glazing (14) has a thickness in the range of ≥ 0.5 to ≤ 5 mm.

10. The composite pane (20) according to any one of the claims 1 or 9,
**characterized in that**
the intumescent layer (14.1) is made of alkali silicates charged with organic compounds, or of layers of salt-filled, aqueous acrylic polymers (hydrogels).

## Revendications

1. Vitrage feuilleté (20) comportant une vitre frontale (10) formant une face d'attaque (A) et un vitrage antifeu (14) présentant au moins une couche intumescente (14.1), dans lequel au moins une vitre intermédiaire (12, 13) est disposée dans la zone entre la vitre frontale (10) et le vitrage antifeu (14),
et dans lequel une couche composite (11) en matière plastique est disposée entre la vitre frontale (10) et la vitre intermédiaire (12) adjacente,
**caractérisé en ce que**
la couche intumescente (14.1) est disposée détournée de la face d'attaque (A) à l'arrière du plan médian géométrique (M) du vitrage feuilleté (20), **en ce qu'**une vitre de fermeture (17) en matière plastique est disposée détournée du plan médian (M) derrière le vitrage antifeu (14),
le plan médian (M) coupe la vitre intermédiaire (12, 13) ou **en ce que** la vitre intermédiaire (12, 13) est disposée détournée de la face d'attaque (A) derrière le plan médian géométrique (M) du vitrage feuilleté (20) et **en ce que** la vitre intermédiaire (12, 13) est reliée au vitrage antifeu (14) par une couche composite (15).

2. Vitrage feuilleté (20) selon la revendication 1,
**caractérisé en ce que**
le vitrage antifeu (14) présente au moins deux vitres (14.2) en verre ou en vitrocéramique, entre lesquelles est disposée la couche intumescente (14.1).

3. Vitrage feuilleté (20) selon l'une des revendications 1 ou 2,
**caractérisé en ce que**
la vitre frontale (10) ou la vitre intermédiaire (12, 13) est reliée au vitrage antifeu (14) au moyen d'une couche composite (15) constituée de polyuréthane.

4. Vitrage feuilleté (20) selon l'une des revendications 1 à 3,
**caractérisé en ce que**
le vitrage antifeu (14) est relié à la vitre de fermeture (17) au moyen d'une couche composite constituée en particulier de polyuréthane.

5. Vitrage feuilleté (20) selon l'une des revendications 1 à 4,
**caractérisé en ce que**
la vitre de fermeture (17) est constituée de polycarbonate ou polyméthacrylate de méthyle.

6. Vitrage feuilleté (20) selon l'une des revendications 1 à 5,
**caractérisé en ce que**
la vitre de fermeture (17), détournée du vitrage antifeu (14), est pourvue d'un revêtement résistant aux rayures, par exemple d'une feuille de protection.

7. Vitrage feuilleté (20) selon l'une des revendications 1 à 6,
**caractérisé en ce que**
la vitre de fermeture (17) présente une épaisseur située dans la plage comprise entre ≥ 2 mm et ≤ 8 mm.

8. Vitrage feuilleté (20) selon l'une des revendications 1 à 7,
**caractérisé en ce que**
la vitre frontale (10) et/ou la/les vitre(s) intermédiaire(s) (12, 13) sont constituées d'un verre de silicate sodocalcique, d'un verre au silicate de bore, d'un verre au silicate d'aluminium, d'un verre au silicate de lithium et d'aluminium ou d'une vitrocéramique et présentent une épaisseur de ≥ 1 mm à ≤ 16 mm.

9. Vitrage feuilleté (20) selon l'une des revendications 1 à 8, **caractérisé en ce que** la couche intumescente (14.1) du vitrage antifeu (14) présente une épaisseur située dans la plage de ≥ 0,5 mm à ≤ 5 mm.

10. Vitrage feuilleté (20) selon l'une des revendications 1 à 9,
**caractérisé en ce que**
la couche intumescente (14.1) est constituée de silicates alcalins auxquels sont incorporés des composés organiques ou de couches de polymères acryliques (hydrogels) aqueux chargés de sel.
